# EUROPÄISCHE PATENTSCHRIFT

(11) **EP 3 445 997 B1**
(45) Veröffentlichungstag und Bekanntmachung des Hinweises auf die Patenterteilung: **03.06.2020**
(21) Anmeldenummer: 17718078.3
(22) Anmeldetag: 19.04.2017
(51) Int. Cl.: F16G 13/16

(54) **SEITENTEIL, KETTENGLIED UND ENERGIEFÜHRUNGSKETTE**
SIDE PART, CHAIN LINK, AND ENERGY CHAIN
PIÈCE LATÉRALE, MAILLON DE CHAÎNE ET CHAÎNE PORTE-CÂBLES

(30) Priorität: 22.04.2016 DE 202016002624 U
(43) Veröffentlichungstag der Anmeldung: 27.02.2019
(73) Patentinhaber: igus GmbH, 51147 Köln (DE)
(72) Erfinder: DOMMNIK, Jörg, 53819 Neunkirchen-Seelscheid (DE); HERMEY, Andreas, 53773 Hennef (DE)
(74) Vertreter: Lippert Stachow Patentanwälte Rechtsanwälte
(86) Internationale Anmeldenummer: PCT/EP2017/059239
(87) Internationale Veröffentlichungsnummer: WO 2017/182494

(56) Entgegenhaltungen:
- EP-A1- 2 194 292
- EP-A1- 2 233 782
- WO-A1-2007/076988
- DE-A1-102014 102 626
- DE-U1- 29 607 492

## Beschreibung

Die Erfindung betrifft ein Seitenteil für ein Kettenglied einer zur Führung von Versorgungsleitungen ausgelegten Energieführungskette, in der benachbarte Kettenglieder um eine Schwenkachse relativ zueinander verschwenkbar verbunden sind, wobei das Seitenteil zur verschwenkbaren Anordnung benachbarter Kettenglieder endseitig jeweils einen zur Begrenzung der Verschwenkung mit korrespondierenden Anschlagflächen und mit einer Schwenkachse versehenen Überlappungsbereich, das heißt einen ersten Überlappungsbereich mit ersten Anschlagflächen und einen zweiten Überlappungsbereich mit zweiten Anschlagflächen, und eine Gleitebene zur Abgleitung der beiden Überlappungsbereiche in Einbaulage an dem jeweils zugeordneten Überlappungsbereich benachbarter Kettenglieder aufweist und zur Dämpfung der Abbremsung der Verschwenkbewegung zumindest jeder ersten Anschlagfläche ein Dämpfungselement in Form einer um eine Biegeachse parallel zur Schwenkachse federelastisch verformbare Federlippe vorgeschaltet angeordnet ist. Die Erfindung betrifft ferner ein Kettenglied mit zwei derartigen Seitenteilen und eine Energieführungskette mit derartigen Kettengliedern.

Ein gattungsgemäßes Seitenteil wie auch Kettenglied und Energieführungskette werden in DE 296 07 492 U1 beschrieben, wobei die einer ersten Anschlagsfläche zugeordnete Federlippe in einer Ruheposition von der Anschlagsfläche weg verschwenkt und mit dem Anschlagen erster und zweiter Anschlagflächen gegeneinander unter Aufbau einer elastischen Vorspannung flächig gegen die erste Anschlagsfläche verschwenkt wird. Die Federlippe ist ohne Anbindung an die Seitenwand des Seitenteils um eine Biegeachse verschwenkbar, wobei die mit dem Anschlagen der zweiten Anschlagfläche übertragene Bewegungsenergie über die Erstreckung der Federlippe in Richtung der Biegeachse gleichmäßig übertragen wird.

Aus der WO 2007/076988 A1 ist ein Seitenteil für ein Kettenglied einer Energieführungskette bekannt, dessen erster Überlappungsbereich elastische Elemente und dessen zweiter Überlappungsbereich Anschläge mit Anschlagflächen aufweisen, die mit den elastischen Elementen des ersten Überlappungsbereichs eines unmittelbar benachbarten Kettenglieds zusammenwirken. Die elastischen Elemente werden, ohne dass sie eine Anbindung an eine Seitenwand des Seitenteils aufweisen, über ihre gesamte Erstreckung senkrecht zu den Seitenwänden gleichmäßig durch die Anschläge beaufschlagt.

Desgleichen geht aus der EP 2 233 782 A1 ein Seitenteil eines Kettengliedes einer Energieführungskette hervor, das in einem ersten Überlappungsbereich sich zwei radial von der Verschwenkachse des Seitenteils erstreckende, in einem Winkel zueinander angeordnete elastische Vorsprünge und in einem zweiten Überlappungsbereich einen Anschlag mit zwei gegenüberliegenden Anschlagflächen aufweist, die mit den Endbereichen der elastischen Vorsprünge eines unmittelbar benachbarten Seitenteils zusammenwirken. Hierbei wird die durch den Anschlag auf die elastischen Vorsprünge übertragene Bewegungsenergie ebenfalls über die gesamte Erstreckung der Vorsprünge senkrecht zu den Seitenwänden des Seitenteils gleichmäßig übertragen.

Aus der EP 2 194 292 A1 geht ein Seitenteil eines Kettengliedes einer Energieführungskette hervor, dessen einer Überlappungsbereich eine kreissegmentförmige Öffnung mit seitlichen, radial verlaufenden Anschlagflächen aufweist. Im anderen Überlappungsbereich ist ebenfalls eine kreissektorförmig ausgebildete Öffnung ausgebildet, deren Symmetrieachse bei Zusammenfügung zweier Seitenteile mit der Symmetrieachse der kreissektorförmigen Öffnung im Überlappungsbereich des unmittelbar benachbarten Seitenteils übereinstimmt. In die kreissektorförmige Durchgangsöffnung im anderen Überlappungsbereich ist ein Gelenkkopf für das Drehgelenk zwischen zwei unmittelbar benachbarten Seitenteilen eingesetzt, an dem zwei elastische Flügel angeformt sind, die in die kreissektorförmige Öffnung im Überlappungsbereich des unmittelbar benachbarten Seitenteils eingreifen. Bei Verschwenkung der unmittelbar benachbarten Seitenteile relativ zueinander aus einer neutralen Position in eine langgestreckte oder abgewinkelte Position schlägt jeweils einer der beiden elastischen Flügel an der radialen Wand der kreissektorförmigen Öffnung eines der Seitenteile gegen die radialen Wände der kreissektorförmigen Öffnung des anderen Seitenteils an und wird dabei elastisch deformiert.

Wenngleich durch die Deformation der elastischen Elemente der bekannten Seitenteile jeweils eine gewisse Dämpfung erzielt wird, bleibt doch eine bestimmte Restgeschwindigkeit übrig, mit der die Anschlagflächen abrupt unter unerwünschter Geräuschentwicklung gegeneinander schlagen.

Eine Aufgabe der Erfindung ist, ein gattungsgemäßes Seitenteil bzw. ein Kettenglied mit zwei dieser Seitenteile und eine Energieführungskette mit diesen Kettengliedern bereitzustellen, bei der die Restgeschwindigkeit, die zu einem mehr oder weniger abrupten Stopp führt, weiter zu verringern.

Die gestellte Aufgabe wird erfindungsgemäß durch die Merkmale des Anspruches 1 gelöst. Vorteilhafte Weiterbildungen werden in den Unteransprüchen beschrieben. Die gestellte Aufgabe wird bereits dadurch gelöst, dass die Federlippe gegen ihre Erstreckungsrichtung senkrecht zur Gleitebene zumindest partiell an einer Seitenwand des Seitenteils festgelegt angeordnet ist und einen bezüglich ihrer Biegeachse axialen, vom Seitenteil weg erstreckenden Endbereich zur zumindest überwiegenden Einkopplung der Bewegungsenergie aufweist, die über die in Einbaulage des Seitenteils in das Kettenglied der Energieführungskette mit der ersten Anschlagsfläche anschlagwirksam korrespondierende zweite Anschlagfläche des zweiten Überlappungsbereichs des in Einbaulage benachbarten Kettengliedes auf diese Federlippe übertragen wird.

Die Einkopplung der Bewegungsenergie erfolgt somit nicht, wie im Stand der Technik, über die Erstreckung der Federlippe in Richtung der Biegeachse gleichmäßig, sondern asymmetrisch in dem bezüglich der Biegeachse axialen Endbereich. Durch diese asymmetrische Einkopplung der Bewegungsenergie kann, neben dem Biegemoment, bezüglich einer zur Biegeachse radialen Achse zusätzlich ein Torsionsmoment erzeugt werden, welches die Federlippe zusätzlich zur federelastischen Biegung federelastisch verformt. Damit kann einerseits eine erhöhte Absorption von kinetischer Energie der Schwenkbewegung vor dem endgültigen Anschlag und damit eine Verminderung der Restgeschwindigkeit erzielt werden. Dies ist Material schonend und Geräusch mindernd. Dieser bezüglich der Biegeachse axiale Endbereich ist sich von dem Seitenteil weg erstreckend angeordnet.

Anderseits kann die Federlippe durch die Torsion federelastisch stärker als bei der reinen Biegung verspannt werden. Infolge der gleichzeitigen Torsion und Biegung kann die Federlippe auch federtechnisch kontinuierlich härter werden. Damit wird zur weiteren federelastischen Verformung eine entsprechend höhere Absorption kinetischer Energie möglich. Mit anderen Worten kann die Abbremsung an der Federlippe zunächst sanft und dann immer stärker werdend erfolgen. Es werden somit die Restgeschwindigkeit und damit die Geräuschentwicklung beim Verfahren der Energieführungskette weiter vermindert.

Vorzugsweise erfolgt die zumindest überwiegende Einkopplung der Bewegungsenergie zu mehr als 60%, insbesondere zu mehr als 80% oder mehr als 90%. Idealerweise kann die Einkopplung der Bewegungsenergie vollständig erfolgen. Hierdurch können die weiter unten beschrieben Verspannung der Federlippe und die durch Verformung derselben absorbierte Bewegungsenergie entsprechend erhöht sowie die Restgeschwindigkeit weiter erniedrigt werden.

Insbesondere kann die Krafteinleitung des Biegemomentes in die Federlippen in einem zu der radialen Achse exzentrischen Bereich der jeweiligen Federlippe erfolgen. Dieser exzentrische Bereich ist gleich dem zur Biegeachse axialen Endbereich. Die radiale Achse kann die Biegeachse zumindest etwa senkrecht schneiden.

Die Federlippe kann sich radial oder etwa radial zu der ihr zugeordneten Schwenkachse erstrecken. Sie kann endseitig und insbesondere radial innen zur Schwenkachse an dem Seitenteil festgelegt sein. Damit kann die Biegeachse zumindest nahe oder im Ort der Festlegung der Federlippe an dem Seitenteil angeordnet sein.

Das Seitenteil kann eine übliche Gleitebene zur Abgleitung der beiden Überlappungsbereiche in Einbaulage an dem jeweils zugeordneten Überlappungsbereich benachbarter Kettenglieder aufweisen. In der Gleitebene können die einander zugeordneten Überlappungsbereiche benachbarter Kettenglieder bei Verschwenkung dieser Kettenglieder um die Schwenkachse aneinander vorzugsweise mit Spiel abgleiten. Die zur Schwenkachse senkrechte Gleitebene weist Längsrichtung und Höhenrichtung des Seitenteils auf.

Vorteilhaft konstruktiv einfach kann die Federlippe abgesenkt zur Gleitebene und die Gleitebene mit dem axialen Endbereich zur Krafteinleitung des Biegemomentes in eine Erstreckungsrichtung senkrecht oder etwa senkrecht zu der Gleitebene durchragend angeordnet sein. Insbesondere kann der axiale Endbereich in Erstreckungsrichtung hinten an der Federlippe angeordnet sein. Die oben beschriebene Vorschaltung der Federlippe bedeutet, dass die zweite Anschlagsfläche auf die Weg in eine Anschlagsposition hinein, zuerst auf die Federlippe trifft.

Die zweiten Anschlagsflächen können jeweils exzentrisch zu der in Umfangsrichtung verlaufenden mittleren Achse der Federlippe gegen dieselbe führbar angeordnet sein. Insbesondere kann die Federlippe so in dem ersten Überlappungsbereich angeordnet sein, dass allein ihr zu der radialen Achse exzentrischer Bereich für die Krafteinleitung durch die zweiten Anschlagsflächen zugänglich angeordnet ist.

Insbesondere kann insbesondere vorgesehen sein, dass die zweiten Anschlagflächen des zweiten Überlappungsbereichs gegen Erstreckungsrichtung höchstens bis zu der Gleitebene heranragend angeordnet sind.

Somit können, in Einbaulage der Seitenteile in den Kettenglieder der Energieführungskette, beim Verschwenken benachbarter Kettenglieder deren zweite Anschlagflächen zur Dämpfung umfänglich lediglich jeweils gegen den die Gleitebene durchragenden Endbereich der Federlippe der zugehörigen ersten Anschlagfläche geführt werden. Dies kann beispielsweise zu Beginn der Begrenzung in einem partiellen Bereich des Endbereichs erfolgen.

Konstruktiv einfach kann die Federlippe in einer Ausnehmung angeordnet sein, deren Öffnungsrand in der Gleitebene angeordnet ist. Somit ragt der die Gleitebene durchragende Angriffsbereich in Erstreckungsrichtung aus der Ausnehmung heraus. Diese Ausnehmung kann eine Durchgangsöffnung sein. Sie kann das das Seitenteil durchragen.

Konstruktiv einfach kann die Ausnehmung als Sacköffnung ausgebildet sein. Hierbei kann der Boden der Sacköffnung die Seitenwand zur Festlegung der zugeordneten Federlippe bilden. Es können die Federlippen gegen Erstreckungsrichtung zumindest partiell bodenseitig in der Sacköffnung festgelegt angeordnet sein. Die Sacköffnung hat den Vorteil, dass hier keine Fremdpartikel in die Energieführungskette eindringen können.

In einer Weiterbildung des Seitenteils kann die Federlippe in einer Ruhelage, d.h. unbelastet ohne federelastische Verformung, bezüglich einer radialen Richtung mit zumindest einer Hauptrichtungskomponente sich radial von der Schwenkachse des ersten Überlappungsbereiches nach außen erstreckend angeordnet sein.

Günstig hinsichtlich einer Erhöhung der Aufnahme von Bewegungsenergie kann die Federlippe sich gegen Erstreckungsrichtung keilartig verjüngend ausgebildet sein. Dies gilt insbesondere dann, wenn die Federlippe gegen Erstreckungsrichtung an der Seitenwand, insbesondere bodenseitig in der Sacköffnung festgelegt ist. Mit der Verjüngung ist eine schlanke Bauweise bei zugleich unverminderter Bewegungsenergieaufnahme durch elastische Verformung erzielbar.

Vorzugsweise ist die Federlippe bzw. sind die Federlippen in der Ruhelage exakt radial zur zugehörigen Schwenkachse ausgerichtet. Ferner kann die Federlippe bezüglich der Schwenkachse radial innen an dem Seitenteil festlegt sein und sich von dort aus vorzugsweise radial nach außen erstrecken.

Insbesondere können in dem ersten Überlappungsbereich zwei in zur Schwenkachse in Umfangsrichtung weisende erste Anschlagflächen vorgesehen sein. Hierbei dient, wie üblich, die eine erste Anschlagfläche zur Begrenzung der Verschwenkung der verschwenkbar verbunden Seitenteile bzw. Kettenglieder in eine Verschwenkrichtung und die andere erste Anschlagfläche zur Begrenzung der Verschwenkung derselben in der hierzu entgegengesetzten Verschwenkrichtung. Insbesondere ist jeder ersten Anschlagfläche eine Federlippe zugeordnet ist, die in jeweils vorgesehener umfänglichen Anschlagsrichtung vorgelagert zu der zugeordneten Anschlagfläche angeordnet ist.

Vorzugsweise kann die Federlippe in ihrer Ruhelage über einen Spalt beabstandet zur ersten Anschlagfläche angeordnet sein. Damit kann zur Abbremsung der Verschwenkbewegung zunächst allein unter Verformung der Federlippe ohne Anlage derselben an der zugeordneten ersten Anschlagfläche und damit vorzugsweise mit relativ weicher federelastischen Verformung erfolgen. Diese Abbremsungsphase kann über die Spaltbreite eingestellt werden. In Abstimmung an die Verschwenkung der Federlippe kann der Spalt in Richtung radial nach außen sich konisch öffnend ausgebildet sein.

Es kann ein sich in Erstreckungsrichtung von dem Seitenteil erstreckender Anschlagvorsprung mit seitlich angeordneten ersten Anschlagflächen vorgesehen sein. Mit dem Anschlagvorsprung können die Federlippen so verbunden sein, dass sie unter elastischer Verformung zu diesem federelastisch verbiegbar hin sind. Hierzu können sich die Federlippen, von einer der Schwenkachse zugewandten Seite des Anschlagvorsprungs ausgehend, bezüglich der Schwenkachse radial oder zumindest etwa radial nach außen erstrecken. Die Federlippen können endseitig an dieser Seite festgelegt angeordnet sein. Es kann der Anschlagvorsprung die Ausnehmung seitlich begrenzen.

Vorzugsweise ist der Anschlagvorsprung spiegelsymmetrisch bezüglich einer sich radial zur Schwenkachse und in Längsrichtung des Seitenteils erstreckenden Symmetrieebene ausgebildet. Insbesondere wird die Spiegelsymmetrieebene durch beide Schwenkachsen der Überlappungsbereiche aufgespannt.

In einer vorteilhaften Ausbildungsform des Seitenteils kann bezüglich der Schwenkachse des ersten Übergangsbereichs, die beiden Federlippen in einem ersten radialen Winkel und die beiden ersten Anschlagflächen in einem zweiten radialen Winkel zueinander angeordnet sein. Hierbei kann der erste radiale Winkel größer als der zweite radiale Winkel ausgebildet sein. Dies hat den Vorteil, dass, in Einbaulage, sich die in Ruhelage beabstandet zu der zugehörigen ersten Anschlagfläche gehaltene Federlippe unter Belastung durch die zugehörige zweite Anschlagfläche aus der Ruhelage in Umfangsrichtung gegen die erste Anschlagfläche gedrückt nicht gleich flächenhaft sondern eher linienhaft und damit weniger hart an der ersten Anschlagfläche anschlägt, wodurch die Geräuschentwicklung gedämpft wird.

Wie üblich kann der zweite Überlappungsbereich eine zu seiner Schwenkachse kreisringabschnittsartige Ausnehmung mit seitlichen in Umfangsrichtung weisenden die zweiten Anschlagflächen bildenden Seitenflächen aufweisen. Hierbei können jedoch die zweiten Anschlagflächen einen dritten radialen Winkel einschließen, der insbesondere gleich dem zweiten radialen Winkel ist, einschließen.

Ähnlich wie bei den ersten Anschlagflächen, so können in Einbaulage hierdurch die zweiten Anschlagflächen zur Dämpfung des Anschlages nicht gleich zur linienhaften oder sogar flächigen Anlage an die jeweils zugeordnete Federlippe kommen. Vielmehr kann beim Anschlag einer zweiten Anschlagfläche gegen eine erste Anschlagfläche sich die zweite Anschlagfläche in einem ersten Kontakt mit der Federlippe mit einem radial äußeren Bereich zur kraftübertragungswirksamen an dem radial äußeren Ende der Federlippe kommen, indem die Spitze bezüglich der Federkraft weich federelastisch gegen zu der ersten Kontaktfläche hin gebogen wird, sodass hierdurch die Geräuschentwicklung minimiert werden kann. Hierbei ist es von Vorteil, wenn, was vorgesehen sein kann, die Federlippen bezüglich der radialen Richtung nach außen sich keilartig verjüngend ausgebildet sind, wodurch das sich verjüngende Ende weichelastischer und damit leichter in Umfangsrichtung zu der zugeordneten ersten Anschlagfläche hin biegbar ist.

Somit kann mittels der Erfindung durch die zusätzliche Torsion nicht nur in Dämpfung der Verschwenkbewegung eine größere elastische Verformung bzw. Verformungsarbeit der Federlippe erzielt werden. Es kann darüber hinaus diese Verformungsarbeiten in drei verschiedenen Phasen mit steigender Federkonstante von weich nach hart erfolgen, wobei die Übergänge zwischen Phasen fließend sein können:
In einer ersten Phase kann ein relativ weich elastisches Umbiegen des radial äußeren Endes der Federlippe unter radial äußerer Anlage der zweiten Anschlagfläche gegen die Federlippe erfolgen, welches ähnlich der federelastischen Biegung gemäß dem Stand der Technik sein kann. Mit der Anlage kann zugleich das Einbringen eines Torsionsmomentes bezüglich der radialen Achse erfolgen, das neben dem Umbiegen eine federelastische Torsion und damit weiteren federelastische Verspannung der Federlippe bewirkt. Schließlich kann es in der dritten Phase zu einer flächigen Anlage zwischen der ersten Anschlagsfläche und der Federlippe und/oder der Federlippe und der zweiten Anschlagsfläche mit stärkerer federelastischer Verformung insbesondere der Federlippe kommen, welche eher hartelastisch ist. Somit kann die Geschwindigkeit der relativen Drehbewegung beim Verschwenken der beiden benachbarten Kettenglieder der Energieführungskette an den Anschlägen unter Verminderung der Geräuschentwicklung erst langsam, dann immer stärker bis auf eine Restgeschwindigkeit abgebremst und eventuell bis nahe zu einem Stillstand gebracht werden.

Insgesamt kann festgestellt werden, dass die Federlippe erfindungsgemäß so angeordnet und ausgebildet werden kann, dass deren Federkonstante mit steigender plastischer Verformung über dem Bremsablauf ansteigt. Damit kann die Bremsung materialschonend und insbesondere geräuscharm weich eingeleitet und dann immer stärker werden. Damit kann die Restgeschwindigkeit zumindest soweit vermindert werden, dass die Geräuschentwicklung beim Anschlag minimiert werden kann. Ferner können über den Bremsablauf bestimmte Phasen mit unterschiedlichen Federkonstanten eingestellt werden. Hierbei kann die Federkonstante einer Phase auch über den Bremsablauf sich ändern, insbesondere größer werden.

Es versteht sich, dass die Schwenkachsen der Überlappungsbereiche und damit die des Kettengliedes und die der Energieführungskette parallel zueinander angeordnet sind. Es können in üblicher Weise der eine Überlappungsbereich einen Schwenkzapfen und der andere Überlappungsbereich eine Schwenköffnung zur Aufnahme des Schwenkzapfens aufweisen, wobei in Einbaulage die axial ineinandergreifenden Überlappungsbereiche durch Eingriff des Schwenkzapfens in die zugehörige Schwenkachse die Schwenkachse ausbilden.

Alternativ kann ein Kettenglied mit zwei Seitenteilen gemäß einer oder mehrerer zuvor oder im Weiteren beschriebenen Ausführungsformen vorgesehen sein. Hierbei können die Seitenteile über zumindest einen Quersteg voneinander beabstandet und bezüglich eine Spiegelsymmetrieebene senkrecht zur Querrichtung symmetrisch zueinander angeordnet sein.

In einer Weiterbildung können die Seitenteile über zumindest einen Quersteg voneinander beabstandet angeordnet sein. Vorgesehen werden kann, dass die Seitenteile in Einbaulage in das Kettenglied bezüglich eine Spiegelsymmetrieebene senkrecht zur Querrichtung symmetrisch zueinander angeordnet sind.

Es können die ersten Überlappungsbereiche bezüglich der Spiegelsymmetrieebene einander gegenüberliegend angeordnet sein. Gleiches gilt folglich für die zweiten Überlappungsbereiche.

Ferner kann der zumindest eine Quersteg in üblicher Weise in Längsrichtung zwischen den Überlappungsbereichen oberhalb oder unterhalb an den Seitenteilen angreifen.

Ferner kann alternativ eine Energieführungskette mit Kettengliedern gemäß einer oder mehrerer zuvor oder im Weiteren beschriebenen Ausführungsformen vorgesehen sein, wobei die Kettenglieder jeweils zwei Seitenteile gemäß einer oder mehrerer zuvor oder im Weiteren beschriebenen Ausführungsformen vorgesehen sein. Die Seitenteile benachbarter Kettenglieder können unter Ausbildung eines linken Laschenstrangs und eines rechten Laschenstrangs mit miteinander korrespondierenden ersten und zweiten Überlappungsbereichen ineinander greifend verschwenkbar miteinander verbunden sein.

Es wird ferner als Vorteil angesehen, wenn die Anschlagflächen und Federlippen der Seitenteile in Einbaulage der Laschenstränge nach außen hin geschützt und insbesondere zwischen den Überlappungsbereichen nach außen hin geschützt angeordnet sind.

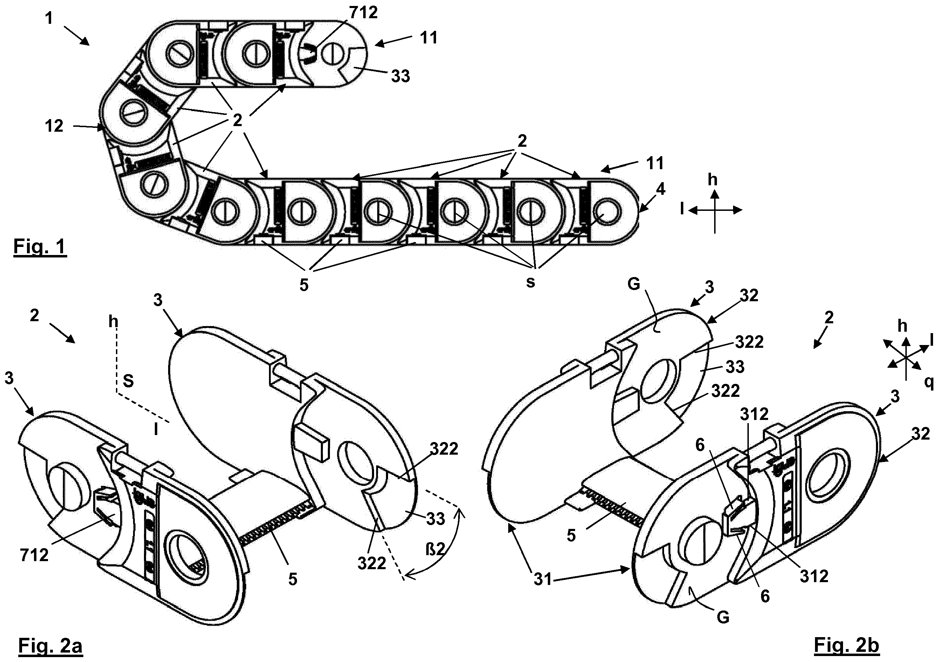

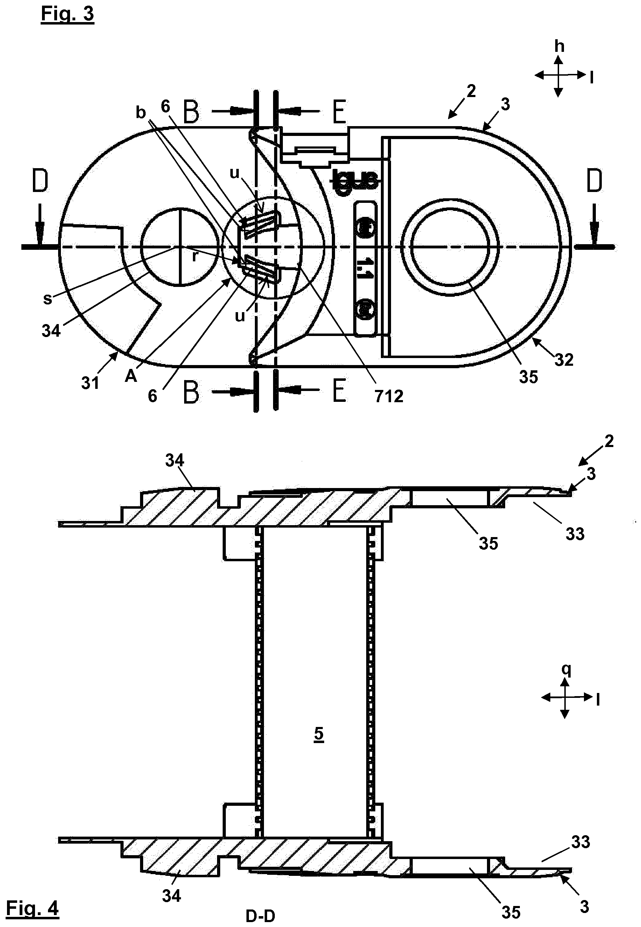

Die vorliegende Erfindung wird im Folgenden anhand mehrerer in einer Zeichnung dargestellten Ausführungsformen der Seitenteile, der Kettenglieder sowie der Energieführungskette näher erläutert, ohne jedoch die Erfindung hierauf zu beschränken. In der Zeichnung zeigen:
- Fig. 1: eine perspektivische Seitenansicht zu eine Energieführungskette mit Seitenteile aufweisenden Kettengliedern,
- Fig. 2a und 2b: jeweils ein perspektivische Seitenansicht eines Kettenglieds ohne oberen Quersteg,
- Fig.3: eine Seitenansicht des Kettengliedes gemäß Figur 2,
- Fig. 4: eine Längsschnittansicht des Kettenglieds senkrecht zur Höhenrichtung h gemäß dem Schnittverlauf D-D in Figur 3,
- Fig. 5: eine Detailansicht A des Kettenglieds gemäß Figur 3,
- Fig. 6a: eine Querschnittsansicht des Kettenglieds gemäß dem Schnittverlauf B-B in Figur 3,
- Fig. 6b: eine Dateiansicht C gemäß Figur 6a
- Fig. 7a: eine Querschnittsansicht des Kettenglieds gemäß dem Schnittverlauf E-E in Figur 3 und
- Fig. 7b: eine Dateiansicht F gemäß Figur 7a.
(In der Beschreibung sind sämtliche Begrifflichkeiten zur Beschreibung der Örtlichkeit wie oben, unten, vorn, hinten, rechts und links so gemeint, wie sie in der jeweiligen Figur selbst gezeigt ist, es sei denn, es wird eigens anders definiert.) In Figur 1 wird eine Seitenansicht einer Energieführungskette 1 mit in Figuren 2-7 dargestellten Kettenglieder 2 gezeigt, wobei in Längsrichtung l benachbarte Kettenglieder 2 jeweils um eine Schwenkachse s verschwenkbar verbunden sind. Hierbei sind sämtliche Schwenkachsen s in der Energieführungskette 1 in einer Querrichtung q und damit parallel zueinander angeordnet. Hierbei ist die Energieführungskette 1 in üblicher Weise unter Ausbildung zweier Trume 11 über einen Umlenkbogen 12 verfahrbar, wobei die Kettenglieder 2 im Übergang von einem Trum 11 zum Umlenkbogen 12 jeweils relativ zueinander verschwenkt werden.

Die Kettenglieder 2 weisen jeweils zwei Seitenteile 3 auf, die in Einbaulage in der Energieführungskette einen linksseitigen bzw. rechtsseitigen Laschenstrang 4 ausbilden. Hierbei ist in dieser Ausführungsform der Energieführungskette 1 die beiden Seitenteile 3 jedes Kettenglied 2 über einen oberseitig und unterseitig angreifenden Quersteg 5 parallel zueinander beabstandet gehalten. In den Figuren 2 bis 7 ist der hier lösbare obere Quersteg 5 von dem hier dargestellten Kettenglied 2 entfernt, während der untere Quersteg 5 fest mit den Seitenteilen 3 verbunden ist. Somit definieren Quersteg und Seitenlaschen der Kettenglieder 2 in Einbaulage einen Aufnahmeraum für hier nicht dargestellte Versorgungsleitungen.

Die Seitenteile 3 weisen zur verschwenkbaren Anordnung benachbarter Kettenglieder 2 in der Energieführungskette 1 endseitig jeweils einen die Schwenkachse s aufweisenden Überlappungsbereich, das heißt einen ersten Überlappungsbereich 31 und einen zweiten Überlappungsbereich 32, auf. Hierbei greifen in Einbaulage benachbarte Kettenglieder 2 über die Überlappungsbereiche 31, 32 unter Ausbildung der Schwenkachsen s ineinander, wobei jeweils ein erster Überlappungsbereich 31 eines Kettengliedes 2 mit einem zweiten Überlappungsbereiche 32 des benachbarten Kettengliedes 2 zusammenwirken. Hierzu weisen die Seitenteile 3 jeweils eine Gleitebene G auf, an der die zusammenwirkenden Überlappungsbereiche 31, 32 mit der Schwenkbewegung der benachbarten Kettenglieder 2 abgleiten. Hieraus ergibt sich zwangsläufig, dass die Gleitebene G eines Seitenteils 3 beiden Überlappungsbereichen 31, 32 gemein ist.

Die Seitenteile 3 sind bezüglich einer die Längsrichtung l und Höhenrichtung h aufweisenden und bezüglich der Querrichtung q mittig angeordneten Spiegelsymmetrieebene S spiegelsymmetrisch in dem jeweiligen Kettenglied 2 angeordnet.

Zur üblichen Begrenzung der Verschwenkbewegung der in der Energieführungskette 1 benachbarten Kettenglieder 2 weisen die beiden Überlappungsbereiche 31, 32 jeweils zwei Anschlagflächen, d.h. zwei erste Anschlagflächen 311 bzw. zwei zweite Anschlagflächen 322, auf, wobei jeweils eine erste Anschlagfläche 311 und eine zweite Anschlagfläche 322 zur Bildung des Anschlags zusammenwirken.

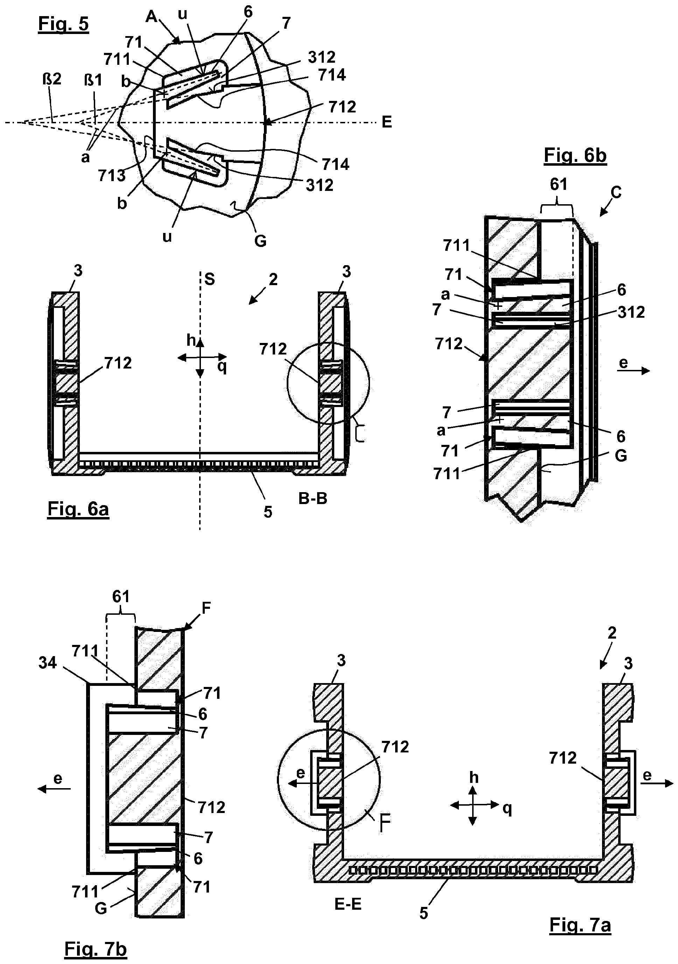

Wie insbesondere Figur 5 entnehmbar, ist jeder der beiden ersten Anschlagflächen 311 ein Dämpfungselement in Form einer Federlippe 6 zugeordnet, die über einen Spalt 7 beabstandet zu dieser ersten Anschlagsfläche 311 angeordnet und um eine Biegeachse b parallel zur Schwenkachse s federelastisch verformbar ist. Diese Federlippen 6 sind somit jeweils in Umfangsrichtung u federelastisch biegbar. Die Federlippen 6 weisen jeweils einen bezüglich ihrer Biegeachse b axialen Endbereich 61 zur hier zumindest nahezu vollständigen Einkopplung der Bewegungsenergie auf, die durch die in Einbaulage des Seitenteils 3 in das Kettenglied 2 der Energieführungskette 1 mit der ersten Anschlagsfläche 311 anschlagwirksam korrespondierende zweite Anschlagfläche 322 des zweiten Überlappungsbereichs 32 des in Einbaulage benachbarten Kettengliedes 2 auf diese Federlippe 6 übertragen wird. Wird somit in Einbaulage eine mit einer ersten Anschlagsfläche 311 zusammenwirkende zweite Anschlagfläche 322 in Umfangsrichtung u (Figur 5) gegen diese erste Anschlagfläche 311 geführt, so trifft diese zunächst auf die hierzu vorgelagerte Federlippe 6, die dadurch entsprechend wieder elastisch deformiert wird.

Wie am besten Figur 6 und 7 im Zusammenhang mit Figur 5 entnehmbar, erfolgt die Krafteinleitung in die Federlippen 6 erfindungsgemäß in dem zu einer radialen Achse a exzentrischen Endbereich 61 der jeweiligen Federlippe 6. Hierdurch wird bezüglich der radialen Achse a ein Torsionsmoment auf die jeweilige Federlippe 6 erzeugt, welches zu einer federelastischen Verspannung führt. Wie detaillierter oben beschrieben, ermöglicht dies eine entsprechend größere Aufnahme an kinetischer Energie und damit zu einer verstärkten Abbremsung. Biegeachse b und radiale Achse a sind bevorzugt sich senkrecht schneidend angeordnet.

Die beiden Federlippen 6 sind jeweils abgesenkt zur Gleitebene G und mit dem Endbereich 61 in einer Erstreckungsrichtung e senkrecht zur Gleitebene G dieselbe durchragend angeordnet. Ferner sind zweiten Anschlagflächen 322 des zweiten Überlappungsbereichs 32 gegen Erstreckungsrichtung e bis zu der Gleitebene G heranragend angeordnet. Wie deutlich Figuren 2a und 2b entnehmbar, sind in üblicher Bauweise die zweiten Anschlagflächen 322 des zweiten Überlappungsbereichs 32 dadurch gebildet, dass aus der Gleitebene G eine kreisringabschnittsartige Ausnehmung 323 eingebracht ist, die von den zweiten Anschlagflächen 322 flankiert wird, wobei deren umfängliche Beabstandung abzüglich der umfänglichen Beabstandung der Federlippen 6 zugleich etwa den durch die paarig zusammenwirkenden Anschlagflächen 311,322 begrenzten Verschwenkwinkel markiert. Wie aus den Figuren 2a und 2b ableitbar, sind Anschlagflächen 311,322 und Federlippen 6 in Einbaulage zwischen die Seitenteile 3 gebracht und damit nach außen hin abgedeckt geschützt angeordnet.

Die Federlippen 6 sind jeweils in einer hier als Sacköffnung 71 ausbildeten Ausnehmung angeordnet, deren Öffnungsrand 711 in der Gleitebene G angeordnet sind. Somit ist zur Einleitung der Bewegungsenergie in die Federlippen 6 durch die zweiten Anschlagsflächen 322 allein ihr exzentrischer Endbereich 61 zugänglich.

Die Federlippen 6 sind jeweils gegen Erstreckungsrichtung e an einer Seitenwand des Seitenteils festgelegt, indem sie hier bodenseitig der Sacköffnung 71 festgelegt ist. Damit wird die Federlippe 6 weiter versteift. Sie erhält quasi eine erhöhte Federkonstante. Ferner ist hierdurch gegenüber einer Nichtfestlegung der Federlippen 6 bodenseitig der Sacköffnung 71 die radiale Achse a vermutlich etwa bis nahe zum Boden der Sacköffnung abgesenkt, wodurch das Torsionsmoment bezüglich der radialen Achse a entsprechend vergrößert wird. Es kann eine weiter vergrößerte Verspannung der Federlippe 6 entstehen. Die Lage der in den Figuren 6b und 7b eingezeichneten radialen Achse a kann nur als ungefähr aufgefasst werden, da diese noch nicht genau ermittelt werden konnte. Wie oben beschrieben, wird die Torsionswirkung auf die Federlippe 6 und damit die mögliche Bewegungsenergieaufnahme in Abhängigkeit von einem Federweg erhöht.

Es ist ein sich in Erstreckungsrichtung e von dem Seitenteil 3 erstreckender Anschlagvorsprung 713 mit den seitlich angeordneten ersten Anschlagflächen 311 vorgesehen. Die Federlippen 6 erstrecken sich, von einer der Schwenkachse s zugewandten Seite 714 des Anschlagvorsprungs 713 ausgehend, bezüglich der Schwenkachse s hier etwa radial nach außen. Die Federlippen 6 sind fußseitig an der Seite 714 festgelegt. Hierdurch ist ihre axiale Biegeachse b etwa im fußseitigen Bereich angeordnet.

Wie insbesondere Figur 5 deutlich entnehmbar, ist die Anordnung mit Federlippen 6 und Anschlagvorsprung 713 spiegelsymmetrisch zu einer Ebene E ausgebildet, die hier die beiden Schwenkachsen s der Überlappungsbereiche 31, 32 enthält und dadurch definiert wird. Ferner sind die beiden Federlippen 6 bezüglich der Schwenkachse s des ersten Übergangsbereichs 31 in einem ersten radialen Winkel β1 und die beiden ersten Anschlagflächen in einem zweiten radialen Winkel β2 zueinander angeordnet.

Wie in Figur 2 gezeigt, weist der zweite Überlappungsbereich 32 eine zu seiner Schwenkachse s kreisringabschnittsartige Ausnehmung 33 mit seitlichen in Umfangsrichtung u weisenden die zweiten Anschlagflächen 322 bildenden Seitenflächen auf. Hierbei schließen die zweiten Anschlagflächen einen zur Schwenkachse s des zweiten Überlappungsbereichs 32 dritten radialen Winkel ein, der gleich dem zweiten radialen Winkel β2 ist. Somit liegen in einer Anschlagsposition die beiden zugeordneten Anschlagsflächen 311,322 über die zugehörige dazwischenliegende Federlippe 6 flächig aneinander an.

Der erste radiale Winkel β1 ist größer als der zweite radiale Winkel β2. Wie bereits weiter oben ausführlich beschrieben, berührt die zweite Anschlagfläche 322 in der ersten Phase des Abbremsvorganges nahezu punkartig die Federlippe 6, die dann entsprechend federelastisch weich und damit unter höchstens geringer Geräuschentwicklung reagiert. Gesteigert wird dieses weiche Nachgeben der Federlippe 6 dadurch, dass die Federlippe 6 bezüglich der radialen Richtung r sich keilartig verjüngend ausgebildet ist. Dies kann aus einem Vergleich der beiden Querschnittsdarstellungen gemäß Figur 6 und 7 entnommen werden. Mit dem ersten Anliegen erfolgt die Kraftübertragung auch unter Erzeugung des oben beschriebenen Torsionsmomentes, wodurch die Federlippe 6 stärker verspannt und damit federelastisch härter wird, wobei dieser Prozess kontinuierlich und somit nicht unter Geräuschverstärkung erfolgt.

Die Torsion kann dadurch verstärkt werden, dass, wie ebenfalls den Figuren 6 und 7 entnehmbar, sich die Federlippen 6 gegen Erstreckungsrichtung e keilartig verjüngend ausgebildet sind. Damit kann die Verspannung der Federlippe 6 durch Torsion verstärkt bodenseitig der Sacköffnung 71 und damit dort erfolgen, wo das Torsionsmoment bezüglich der Achse a am größten ist, so dass die Aufnahme an Bewegungsenergie durch elastische Verformung der Federlippe 6 optimiert wird. Mit der ersten Anlage der Federlippe 6 gegen die erste Anschlagsfläche 311 kann die Kraftübertragung über einen linienhaften Kontaktbereich und damit verstärkt erfolgen, welches eine weitere Federverspannung mit sich führt. Die ist im Einzelnen weiter oben auch unter Darstellung der unterschiedlichen Phasen des Bremsvorganges erläutert.

Wie insbesondere der Detaildarstellung in Figur 5 entnehmbar, erweitert sich der Spalt 7 unter Ausbildung einer Kante 714 seitlich an dem Anschlagvorsprung 712 konisch radial nach außen, wobei die eigentliche erste Anschlagfläche 311 rechts von der Kante 714 beginnt, wobei die Federlippe 6 mit ihrem Anlegen an der ersten Anschlagfläche 311 unter Erhöhung ihrer Federsteifigkeit und damit Aufnahme an Bewegungsenergie über die Kante 714 zumindest partiell gebogen werden kann. Hierbei ist die Kante 714 zur Verschleiß- und Geräuschminderung gerundet ausgebildet.

Jedes Seitenteil 3 weist einen an sich bekannten Schwenkzapfen 34 und eine an sich bekannte Schwenköffnung 35 zur Ausbildung der Schwenkverbindung mit benachbarten Kettengliedern 2 auf. Die Herstellung der Schwenkverbindung kann auch mittels beliebig anderer geeigneter Mittel erfolgen.

### Seitenteil, Kettenglied und Energieführungskette

### Bezugszeichenliste

- 1: Energieführungskette
- 11: Trum
- 12: Umlenkbogen
- 2: Kettenglied
- 3: Seitenteil
- 31: erster Überlappungsbereich
- 312: erste Anschlagsfläche
- 32: zweiter Überlappungsbereich
- 322: zweite Anschlagsfläche
- 33: Ausnehmung
- 34: Schwenkzapfen
- 35: Schwenköffnung
- 4: Laschenstrang
- 5: Quersteg
- 6: Federlippe
- 61: Endbereich
- 7: Spalt
- 71: Sacköffnung
- 711: Öffnungsrand
- 712: Anschlagvorsprung
- 713: Seite
- 714: Kante
- a: Achse
- b: Biegeachse
- l: Längsrichtung
- h: Höhenrichtung
- r: radiale Richtung
- s: Schwenkachse
- q: Querrichtung
- u: umfängliche Richtung
- β1: erster radialer Winkel
- β2: zweiter radialer Winkel
- G: Gleitebene
- S: Spiegelsymmetrieebene
- E: Ebene

## Patentansprüche

1. Seitenteil für ein Kettenglied (2) einer zur Führung von Versorgungsleitungen ausgelegten Energieführungskette(1), in der benachbarte Kettenglieder (2) um eine Schwenkachse (s) relativ zueinander verschwenkbar verbunden sind, wobei das Seitenteil (3) zur verschwenkbaren Anordnung benachbarter Kettenglieder (2) endseitig jeweils einen zur Begrenzung der Verschwenkung mit korrespondierenden Anschlagflächen (312, 322) und mit einer Schwenkachse (s) versehenen Überlappungsbereich(31,32), das heißt einen ersten Überlappungsbereich (31) mit ersten Anschlagflächen (312) und einen zweiten Überlappungsbereich (32) mit zweiten Anschlagflächen (322), und eine Gleitebene (G) zur Abgleitung der beiden Überlappungsbereiche (31, 32) in Einbaulage an dem jeweils zugeordneten Überlappungsbereich (32, 31) benachbarter Kettenglieder (2) aufweist und zur Dämpfung der Abbremsung der Verschwenkbewegung zumindest jeder ersten Anschlagfläche (312) ein Dämpfungselement in Form einer um eine Biegeachse (b) parallel zur Schwenkachse (s) federelastisch verformbare Federlippe (6) vorgeschaltet angeordnet ist, **dadurch gekennzeichnet, dass** die Federlippe (6) gegen ihre Erstreckungsrichtung (e) senkrecht zur Gleitebene (G) zumindest partiell an einer Seitenwand des Seitenteils (3) festgelegt angeordnet ist und einen bezüglich ihrer Biegeachse (b) axialen , vom Seitenteil weg erstreckenden Endbereich (61) zur zumindest überwiegenden Einkopplung der Bewegungsenergie aufweist, die über die in Einbaulage des Seitenteils (3) in das Kettenglied (2) der Energieführungskette (1) mit der ersten Anschlagsfläche (312) anschlagwirksam korrespondierende zweiten Anschlagfläche (322) des zweiten Überlappungsbereichs (32) des in Einbaulage benachbarten Kettengliedes (2) auf diese Federlippe (6) übertragen wird.

2. Seitenteil nach Anspruch 1, **dadurch gekennzeichnet, dass** die Federlippe (6) abgesenkt zur Gleitebene (G) und die Gleitebene (G) mit dem Endbereich (61) zur Krafteinleitung des Biegemomentes in der Erstreckungsrichtung (e) durchragend angeordnet ist.

3. Seitenteil nach Anspruch 1 oder 2, **dadurch gekennzeichnet, dass** die zweiten Anschlagflächen (322) des zweiten Überlappungsbereichs (32) gegen die Erstreckungsrichtung (e) höchstens bis zu der Gleitebene (G) heranragend angeordnet sind.

4. Seitenteil nach einem der Ansprüche 1 bis 3, **dadurch gekennzeichnet, dass** die Federlippe (6) in einer Ausnehmung angeordnet ist, deren Öffnungsrand (711) in der Gleitebene (G) angeordnet ist.

5. Seitenteil nach Anspruch 4, **dadurch gekennzeichnet, dass** die Ausnehmung als Sacköffnung (71) ausgebildet ist und dass die Federlippe (6) gegen Erstreckungsrichtung (e) zumindest partiell bodenseitig in der Sacköffnung (71) festgelegt angeordnet ist.

6. Seitenteil nach einem der Ansprüche 1 bis 5, **dadurch gekennzeichnet, dass** die Federlippe (6) bezüglich einer zur Schwenkachse (s) des ersten Überlappungsbereiches (31) radialen Richtung (r) mit zumindest einer Hauptrichtungskomponente sich radial nach außen erstreckend angeordnet ist.

7. Seitenteil nach Anspruch 6, **dadurch gekennzeichnet, dass** die Federlippe (6) bezüglich dieser radialen Richtung (r) sich keilartig verjüngend ausgebildet ist.

8. Seitenteil nach einem der Ansprüche Anspruch 1 bis 7, **dadurch gekennzeichnet, dass** in dem ersten Überlappungsbereich (31) zwei in zur Schwenkachse (s) in Umfangsrichtung weisende erste Anschlagflächen (312) vorgesehen sind, wobei jeder ersten Anschlagfläche (312) eine Federlippe (6) zugeordnet ist, die in jeweils vorgesehener umfänglichen Anschlagsrichtung (u) vorgelagert zu der zugeordneten ersten Anschlagfläche (312) angeordnet ist.

9. Seitenteil nach Anspruch 8, **dadurch gekennzeichnet, dass** ein sich in Erstreckungsrichtung (e) von dem Seitenteil (3) erstreckender Anschlagvorsprung (712) mit den seitlich angeordneten ersten Anschlagflächen (312) vorgesehen ist, wobei sich die Federlippen (6), von einer der Schwenkachse (s) zugewandten Seite (713) des Anschlagvorsprungs (712) ausgehend, bezüglich der Schwenkachse (s) radial oder zumindest etwa radial nach außen erstreckend angeordnet sind.

10. Seitenteil nach Anspruch 9, **dadurch gekennzeichnet, dass** die Federlippen (6) endseitig an der Seite (713) festgelegt sind.

11. Seitenteil nach einem der Ansprüche 8 bis 10, **dadurch gekennzeichnet, dass,** bezüglich der Schwenkachse (s) des ersten Überlappungsbereichs (31), die beiden Federlippen (6) in einem ersten radialen Winkel (β1) und die beiden ersten Anschlagflächen (312) in einem zweiten radialen Winkel (β2) zueinander angeordnet sind.

12. Seitenteil nach Anspruch 11, **dadurch gekennzeichnet, dass** der zweite Überlappungsbereich (32) eine zu seiner Schwenkachse (s) kreisringabschnittsartige Ausnehmung (33) mit seitlichen in Umfangsrichtung (u) weisenden die zweiten Anschlagflächen (322) bildenden Seitenflächen aufweist, wobei die zweiten Anschlagflächen (322) einen radialen Winkel gleich dem zweiten radialen Winkel (β2) einschließen.

13. Seitenteil nach Anspruch 11 oder 12, **dadurch gekennzeichnet, dass** der erste radiale Winkel (β1) größer als der zweite radiale Winkel (β2) ist.

14. Kettenglied mit zwei Seitenteilen (3) gemäß einem der Ansprüche 1 bis 13.

15. Energieführungskette mit Kettengliedern (2) gemäß Anspruch 14.

## Claims

1. A side portion for a chain link (2) of an energy guiding chain (1) designed for guiding supply lines, in which adjacent chain links (2) are connected pivotably relative to each other about a pivot axis (s), wherein the side portion (3) for the pivotable arrangement of adjacent chain links (2) has at the end a respective overlap region (31, 32) which for limiting the pivotal movement is provided with corresponding abutment surfaces (312, 322) and with a pivot axis (s), that is to say a first overlap region (31) having first abutment surfaces (312) and a second overlap region (32) having second abutment surfaces (322), and a slide plane (G) for slip movement of the two overlap regions (31, 32) in the position of installation against the respectively associated overlap region (32, 31) of adjacent chain links (2), and for damping the deceleration of the pivotal movement there is arranged in front of at least each first abutment surface (312) a damping element in the form of a spring lip (6) resiliently deformable about a bending axis (b) parallel to the pivot axis (s), **characterised in that** the spring lip (6) is arranged fixed in opposite relationship to its extension direction (e) perpendicular to the slide plane at least partially at a side wall of the side portion (3) and has an end region (61) extending away from the side portion which is axial with respect to its bending axis (b) for at least predominantly coupling in the kinetic energy which is transmitted to said spring lip (6) by way of the second abutment surface (322) which in the position of installation of the side portion (3) in the chain link (2) of the energy guiding chain (1) corresponds in abutment-operative relationship with the first abutment surface (312), said second abutment surface (322) being the abutment surface of the second overlap region (32) of the chain link (2) which is adjacent in the position of installation.

2. A side portion according to claim 1 **characterised in that** the spring lip (6) is arranged in sunken relationship with the slide plane (G) and the slide plane (G) is arranged in projecting relationship with the end region (61) for the application of force of the bending moment in the extension direction (e).

3. A side portion according to claim 1 or claim 2 **characterised in that** the second abutment surfaces (322) of the second overlap region (32) are arranged to extend in opposite relationship to the extension direction (e) at most as far as the slide plane (G).

4. A side portion according to one of claims 1 to 3 **characterised in that** the spring lip (6) is arranged in an aperture, the edge (711) of the opening of which is arranged in the slide plane (G).

5. A side portion according to claim 4 **characterised in that** the aperture is in the form of a blind opening (71) and the spring lip (6) is arranged fixed in opposite relationship to the extension direction (e) at least partially at the bottom in the blind opening (71).

6. A side portion according to one of claims 1 to 5 **characterised in that** the spring lip (6) is arranged with at least one main direction component, radially outwardly extending with respect to a direction (r) which is radial with respect to the pivot axis (s) of the first overlap region (31).

7. A side portion according to claim 6 **characterised in that** the spring lip (6) is of a tapering narrowing configuration with respect to said radial direction (r).

8. A side portion according to one of claims 1 to 7 **characterised in that** provided in the first overlap region (31) are two first abutment surfaces (312) facing in the peripheral direction relative to the pivot axis (s), wherein associated with each first abutment surface (312) is a spring lip (6) which is arranged in front of the associated first abutment surface (312) in the respective peripheral abutment direction (u).

9. A side portion according to claim 8 **characterised in that** there is provided an abutment projection (712) which extends in the extension direction (e) from the side portion (3) and has the laterally arranged first abutment surfaces (312), wherein the spring lips (6), starting from a side (713) of the abutment projection (712) that faces towards the pivot axis (s), are arranged extending radially or at least approximately radially outwardly with respect to the pivot axis (s).

10. A side portion according to claim 9 **characterised in that** the spring lips (6) are fixed at the end at the side (713).

11. A side portion according to one of claims 8 to 10 **characterised in that** with respect to the pivot axis (s) of the first overlap region (31) the two spring lips (6) are arranged at a first radial angle (β1) and the two first abutment surfaces (312) are arranged at a second radial angle (β2) relative to each other.

12. A side portion according to claim 11 **characterised in that** the second overlap region (32) has an aperture (33) which is in the fashion of a portion of a circular ring relative to its pivot axis (s) and has lateral side surfaces facing in the peripheral direction (u) and forming the second abutment surfaces (322), wherein the second abutment surfaces (322) include a radial angle equal to the second radial angle (β2).

13. A side portion according to claim 11 or claim 12 **characterised in that** the first radial angle (β1) is larger than the second radial angle (β2).

14. A chain link comprising two side portions (3) according to one of claims 1 to 13.

15. An energy guiding chain comprising chain links (2) according to claim 14.

## Revendications

1. Pièce latérale pour un maillon de chaîne (2) d'une chaîne porte-câbles (1) conçue pour le guidage de conduites d'alimentation, dans laquelle des maillons de chaîne (2) voisins sont reliés entre eux de manière à pouvoir pivoter autour d'un axe de pivotement (s),
la pièce latérale (3), pour l'agencement pivotant de maillons de chaîne (2) voisins, présentant aux extrémités respectives une zone de chevauchement (31, 32) pour limiter le pivotement avec des surfaces de butée (312, 322) correspondantes et pourvue d'un axe de pivotement (s), c'est-à-dire une première zone de chevauchement (31) avec des premières surfaces de butée (312) et une deuxième zone de chevauchement (32) avec des deuxièmes surfaces de butée (322), et un plan de glissement (G) pour faire glisser les deux zones de chevauchement (31, 32) en position de montage sur la zone de chevauchement (31, 32) respectivement attribuée de maillons de chaîne (2) voisins et, pour amortir le freinage du mouvement de pivotement d'au moins chaque première surface de butée (312), un élément d'amortissement sous forme de lèvre de ressort (6) qui est déformable élastiquement autour d'un axe de flexion (b) et parallèlement à l'axe de pivotement (s) est disposé en amont d'au moins chaque première surface de butée (312), **caractérisée en ce que** la lèvre de ressort (6) est disposée de manière fixée au moins partiellement sur une paroi latérale de la pièce latérale (3) contre sa direction d'extension (e) perpendiculairement au plan de glissement (G) et présente une zone d'extrémité (61) axiale par rapport à son axe de flexion (b) et s'étendant loin de la pièce latérale pour le couplage au moins prédominant de l'énergie cinétique qui est transmise à cette lèvre de ressort (6) par l'intermédiaire de la deuxième surface de butée (322) de la deuxième zone de chevauchement (32) du maillon de chaîne (2) qui est voisin dans la position de montage, surface de butée (322) qui, dans la position de montage de la pièce latérale (3) dans le maillon de chaîne (2) de la chaîne porte-câbles (1), correspond de manière efficace en termes de butée avec la première surface de butée (322).

2. Pièce latérale selon la revendication 1, **caractérisée en ce que** la lèvre de ressort (6) est abaissée par rapport au plan de glissement (G) et le plan de glissement (G) disposé avec la zone d'extrémité pour l'introduction de la force du moment de flexion dans la direction de l'extension (e) qui le traverse.

3. Pièce latérale selon la revendication 1 ou 2, **caractérisée en ce que** les deuxièmes surfaces de butée (322) de la deuxième zone de chevauchement (32) sont disposées de manière qu'elles arrivent au maximum jusqu'au plan de glissement (G) contre la direction d'extension (e).

4. Pièce latérale selon l'une quelconque des revendications 1 à 3, **caractérisée en ce que** la lèvre de ressort (6) est disposée dans un évidement dont le bord d'ouverture est disposé dans le plan de glissement (G).

5. Pièce latérale selon la revendication 4, **caractérisée en ce que** l'évidement est agencé comme trou borgne et **en ce que** la lèvre de ressort (6) est fixée au moins partiellement côté fond dans le trou borgne contre la direction d'extension (e).

6. Pièce latérale selon l'une quelconque des revendications 1 à 5, **caractérisée en ce que** la lèvre de ressort (6) est disposée de manière à s'étendre radialement vers l'extérieur par rapport à une direction radiale (r) à l'axe de pivotement (s) de la première zone de chevauchement (32) avec au moins une composante directionnelle principale.

7. Pièce latérale selon la revendication 6, **caractérisée en ce que** la lèvre de ressort (6) est réalisée en se rétrécissant en forme de coin par rapport à cette direction radiale (r).

8. Pièce latérale selon l'une quelconque des revendications 1 à 7, **caractérisée en ce que** deux premières surfaces de butée (312) orientées dans le sens circonférentiel par rapport à l'axe de pivotement sont prévues dans la première zone de chevauchement (31), une lèvre de ressort (6) étant associée à chaque première surface de butée (312), lèvre de ressort (6) qui est disposée dans la direction de butée circonférentielle respective an amont de la première surface de butée (312) associée.

9. Pièce latérale selon la revendication 8, **caractérisée en ce qu'**une saillie de butée (712) s'étendant dans la direction d'extension (e) à partir de la pièce latérale (3) est pourvue des premières surfaces de butée (312) disposées latéralement, les lèvres de ressort (6), partant d'un côté (713) de la saillie de butée (712) tourné vers l'axe de pivotement (2), étant disposées en s'étendant radialement ou au moins approximativement radialement vers l'extérieur par rapport à l'axe de pivotement (s).

10. Pièce latérale selon la revendication 9, **caractérisée en ce que** les lèvres de ressort (6) sont fixées aux extrémités sur le côté (713).

11. Pièce latérale selon l'une quelconque des revendications 8 à 10, **caractérisée en ce que** les deux lèvres de ressort (6), par rapport à l'axe de pivotement (s) de la première zone de chevauchement (31), sont disposées à un premier angle radial (β1) et les deux premières surfaces de butée (312) sont disposées à un deuxième angle radial (β2) l'une par rapport à l'autre.

12. Pièce latérale selon la revendication 11, **caractérisée en ce que** la deuxième zone de chevauchement (32) présente un évidement (33), qui a la forme d'une section annulaire circulaire par rapport à son axe de pivotement (s), avec des surfaces latérales qui sont orientées dans la direction périphérique (u) et forment les deuxièmes surfaces de butée (322), les deuxièmes surfaces de butée (322) formant un angle radial égal au deuxième angle radial (β2).

13. Pièce latérale selon la revendication 11 ou 12, **caractérisée en ce que** le premier angle radial (β1) est supérieur au deuxième angle radial (β2).

14. Maillon de chaîne comprenant deux pièces latérales (3) selon l'une quelconque des revendications 1 à 13.

15. Chaîne porte-câbles comprenant des maillons de chaîne selon la revendication 14.
